# EUROPÄISCHE PATENTSCHRIFT

(11) **EP 3 444 486 B1**
(45) Veröffentlichungstag und Bekanntmachung des Hinweises auf die Patenterteilung: **29.09.2021**
(21) Anmeldenummer: 18183883.0
(22) Anmeldetag: 17.07.2018
(51) Int. Cl.: F16B 7/04, F16B 13/00, E06B 11/02

(54) **BEFESTIGUNGSEINHEIT FÜR ZAUNTEILE**
FIXING UNIT FOR FENCE PARTS
UNITÉ DE FIXATION POUR ACCESSOIRES POUR GRILLAGE

(30) Priorität: 14.08.2017 DE 102017118439
(43) Veröffentlichungstag der Anmeldung: 20.02.2019
(73) Patentinhaber: GAH Alberts GmbH & Co. KG, 58849 Herscheid (DE)
(72) Erfinder: Alberts, Dietrich, 58849 Herscheid (DE)
(74) Vertreter: Beckmann, Jürgen

(56) Entgegenhaltungen:
- WO-A1-2006/085182
- DE-U- 7 317 761
- JP-U- S5 726 568
- US-A- 2 984 698
- US-A1- 2006 202 186
- US-A1- 2016 160 900

## Beschreibung

Die Erfindung betrifft eine Befestigungseinheit gemäß Anspruch 1 zur Anbringung in einer unrunden Öffnung einer Platte wie beispielsweise der Wand eines Zaunpfostens. Des Weiteren betrifft sie ein Zaunsystem gemäß Anspruch 5 enthaltend einen Pfosten und eine derartige Befestigungseinheit.

An Zaunpfosten müssen verschiedene Zaunteile angebracht sein bzw. angebracht werden können, beispielsweise Halter für den Zaundraht oder Gitterstabmatten, oder Scharnierteile für ein Zauntor. Derartige Zaunteile können fest mit den Zaunpfosten verbunden werden, beispielsweise durch Schweißen, oder lösbar, beispielsweise indem sie den Zaunpfosten umklammern (vgl.

DE 10 2008 042 922 A1).

Aus der WO 2006/085182 A1 ist ein Clip zur Befestigung von Zaundrähten bekannt, welcher einen länglichen Fuß aufweist, der nach Einführung durch ein entsprechend geformtes Loch im Zaunpfosten mit dem ganzen Clip zusammen um 90° gedreht und dadurch am Pfosten verankert werden kann.

Die US 2006/202186 A1 offenbart einen Zaun, bei dem Zaunlatten mittels Zapfen in Rahmenteilen drehbar gelagert werden.

Die US 2 984 698 zeigt eine Dichtung aus einem elastischen Kunststoff, welche vermöge flexibler Stege in eine Wandöffnung gequetscht werden kann.

Die US 2016/160900 A1 betrifft dübelartige Klemmkörper, welche in Vierkantrohren kraftschlüssig verankert werden können.

Die DE 73 17761 betrifft Türangeln, und die JP S57 26568 U offenbart ein Scharniergelenk, das mit zwei Schraubbolzen an einem Pfosten befestigt wird.

Von diesem Hintergrund war es Aufgabe der vorliegenden Erfindung, Mittel zur einfachen und sicheren Befestigung von Zaunteilen oder anderen Komponenten bereitzustellen.

Diese Aufgabe wird durch eine Befestigungseinheit nach Anspruch 1 sowie durch ein Zaunsystem nach Anspruch 5 gelöst. Vorteilhafte Ausgestaltungen sind in den Unteransprüchen enthalten.

Die zum Zaunsystem gehörende Befestigungseinheit ist zur Anbringung in einer unrunden (d.h. nicht kreisförmigen, also z.B. ovalen oder eckigen) Öffnung einer Platte ausgelegt, wobei es sich bei der Platte beispielsweise um die Wand eines hohlen Zaunpfostens handeln kann. Die Befestigungseinheit enthält die folgenden Komponenten:
- Ein Innenteil, das eine Anlagefläche mit einer unrunden Außenkontur aufweist. Im Gebrauchszustand liegt die Anlagefläche auf einer Seite der Platte ("Rückseite") am Rand der oben genannten unrunden Öffnung an, sodass der hinter der Anlagefläche gelegene Teil des Innenteiles nicht durch die unrunde Öffnung treten kann.
- Einen Verbindungsbolzen, der relativ zur Anlagefläche abstehend angeordnet und mit dem Innenteil verbunden ist. Der Verbindungsbolzen kann beispielsweise einstückig mit dem Innenteil ausgebildet sein und einen beliebigen Querschnitt haben (Kreis, Vierkant etc.). Typischerweise steht er in etwa senkrecht zur Anlagefläche. Weiterhin kann der Verbindungsbolzen optional ein Außengewinde zur Anbringung von Teilen und/oder zur Befestigung in einem Innengewinde des Innenteils aufweisen. Vorzugsweise ist er als Gewindebolzen ausgebildet.
- Eine Verdrehsicherung, die in Richtung des Verbindungsbolzens verläuft bzw. angeordnet ist oder angeordnet werden kann und im Zustand dieser Anordnung mit dem Innenteil in Eingriff steht. Durch den Eingriff kann insbesondere eine drehfeste Kopplung zwischen Innenteil und Verdrehsicherung in Bezug auf die Achse des Verbindungsbolzens erzeugt werden.

In Zusammenwirkung mit einer geeignet dimensionierten unrunden Öffnung in einer Platte kann die beschriebene Befestigungseinheit in einfacher Weise an der Platte montiert werden, indem das Innenteil mit der Anlagefläche durch die unrunde Öffnung geführt und hinter der unrunden Öffnung so positioniert wird, dass es nicht mehr durch diese hindurch passt, während der Verbindungsbolzen durch die Öffnung der Platte tritt und auf deren Vorderseite beispielsweise für die Befestigung von Zaunteilen zur Verfügung steht. Eine Drehung des gesamten Innenteils um die Achse des Verbindungsbolzens wird dabei durch die Verdrehsicherung verhindert, welche zu diesem Zweck typischerweise mit der Platte bzw. der darin befindlichen unrunden Öffnung zusammenwirkt.

Gemäß der erfinderischen Ausführungsformen wird die Anlagefläche durch mindestens einen Radialfortsatz gebildet, welcher radial nach außen von einem Kreis absteht. Ein solcher Radialfortsatz kann dann durch eine unrunde Öffnung geführt werden, welche die Form einer Kreisfläche mit einer daran ansetzenden, dem Radialfortsatz entsprechenden Erweiterung hat. Nach Durchführung durch eine derartige unrunde Öffnung kann das Innenteil dann durch eine Verdrehung so positioniert werden, dass der Radialfortsatz auf der Rückseite der unrunden Öffnung an der Platte zu liegen kommt und nicht mehr auf direktem Wege zurück durch diese Öffnung treten kann. Typischerweise sind zwei oder mehr derartige Radialfortsätze vorhanden, welche vorzugsweise in etwa gleich verteilt entlang des Umfangs des Kreises angeordnet sind.

Wie bereits erwähnt kann der Verbindungsbolzen einstückig mit den Innenteil ausgebildet sein. Gemäß einer bevorzugten Ausführungsform hat indes der Verbindungsbolzen ein Außengewinde und das Innenteil ein Innengewinde, in welchem der Verbindungsbolzen festgeschraubt ist bzw. geschraubt werden kann. Durch die Verwendung verschiedener Verbindungsbolzen mit beispielsweise unterschiedlichen Ansätzen kann dann dasselbe Innenteil zur Herstellung verschiedener Befestigungseinheiten verwendet werden.

Für die Realisierung der Verdrehsicherung gibt es verschiedene Möglichkeiten. Beispielsweise könnte die Verdrehsicherung einstückig mit dem Innenteil ausgebildet sein. Gemäß einer bevorzugten Ausführungsform wird die Verdrehsicherung jedoch durch eine separate Komponente der Befestigungseinheit gebildet, das sogenannte "Außenteil", welches mit dem Innenteil in Eingriff gebracht werden kann. Innenteil und Außenteil befinden sich dabei in der Regel auf verschiedenen Seiten der Platte. Durch den Eingriff des Außenteils mit dem Innenteil werden diese drehfest um die Achse des Verbindungsbolzens miteinander gekoppelt. Eine Drehblockade des Außenteils bewirkt dann automatisch auch eine Drehblockade des Innenteils. Am Verbindungsbolzen können somit Teile angeschraubt werden, ohne dass die Gefahr besteht, dass sich der Verbindungsbolzen samt Innenteil dabei mitdreht.

Erfindungsgemäß weist das Außenteil mindestens einen Axialfortsatz auf, welcher sich in etwa parallel zum Verbindungsbolzen erstreckt und in Eingriff mit dem Innenteil gebracht werden kann.

Wie die Bezeichnungen "Innenteil" und "Außenteil" andeuten, ist bei Verwendung der Befestigungseinheit an einem hohlen Zaunpfosten das Innenteil typischerweise im Inneren und das Außenteil auf der Außenseite des Zaunpfostens angeordnet.

Wenn das Innenteil wie oben beschrieben mindestens einen Radialfortsatz und das Außenteil den beschriebenen Axialfortsatz enthält, ist der Axialfortsatz im Gebrauchszustand der Befestigungseinheit vorzugsweise neben dem Radialfortsatz angeordnet, d.h. auf derselben axialen Höhe. Bei einer Drehung des Innenteils um die Achse des Verbindungsbolzens wird der Radialfortsatz daher am Axialfortsatz anschlagen, wodurch die gewünschte Verdrehsicherung zwischen Innenteil und Außenteil hergestellt wird. Diese Kopplung zwischen Innenteil und Außenteil kann dann wiederum zu einer Verdrehsicherung der gesamten Befestigungseinheit gegenüber der Platte bzw. dem Zaunpfosten erweitert werden, indem der Axialfortsatz drehfest in der Öffnung der Platte aufgenommen wird.

In einer bevorzugten Ausführungsform wird das Außenteil durch einen Basisring mit mindestens einem axial hiervon abstehenden Axialfortsatz gebildet. Der Basisring kann dann um den Verbindungsbolzen gelegt werden, wobei sich der Axialfortsatz parallel zum Verbindungsbolzen in Richtung des Innenteils erstreckt und mit diesem im Sinne einer drehfesten Kopplung zusammenwirkt. In Verbindung mit einer unrunden Öffnung in einer Platte oder einer Zaunpfostenwand kann weiterhin die Auslegung so sein, dass der Axialfortsatz durch die Öffnung passt, der Basisring jedoch nicht. Das Außenteil bleibt somit auf der Außenseite der Platte festgelegt.

Je nach Anwendungszweck können am Verbindungsbolzen weitere Komponenten angebracht sein oder angebracht werden. Insbesondere kann der Verbindungsbolzen mit einer Buchse für ein Scharniergelenk beispielsweise eines Zauntores verbunden sein.

Die Erfindung betrifft weiterhin ein Zaunsystem, welches einen Zaunträger mit mindestens einer hinterschnittenen, unrunden Öffnung sowie eine Befestigungseinheit gemäß mindestens einem der Ansprüche 1 bis 4 enthält. Der Zaunträger kann beispielsweise ein Zaunpfosten, ein Rahmenteil eines Tores oder dergleichen sein. Dabei sind der Zaunträger bzw. dessen Öffnung sowie die Befestigungseinheit folgendermaßen aufeinander abgestimmt:
- Die Anlagefläche des Innenteils kann durch die Öffnung geführt werden und hinter dieser so positioniert werden, dass der Verbindungsbolzen durch die Öffnung weist und die Anlagefläche durch Zug in Richtung des Verbindungsbolzens nicht wieder durch die Öffnung geführt werden kann.
- Die Verdrehsicherung greift drehfest in die Öffnung ein. Dadurch wirkt sie mit der Öffnung so zusammen, dass sie eine Drehung des Innenteils um den Verbindungsbolzen verhindert.

Das Zaunsystem ermöglicht es somit in einfacher Weise, einen Verbindungsbolzen drehfest an einem Zaunträger zu befestigen. Am Verbindungsbolzen können dann je nach Wunsch verschiedene Zaunteile angebracht werden.

Gemäß einer bevorzugten Ausführungsform des Zaunsystems hat die Öffnung im Zaunträger die Form einer Kreisfläche mit radial nach außen hiervon abstehenden Erweiterungen. Durch eine derartige Öffnung kann das Innenteil einer Befestigungseinheit geführt werden, dessen Anlagefläche durch eine Kreisfläche mit radial abstehen Radialfortsätzen gebildet wird.

Im Folgenden wird die Erfindung mit Hilfe der Figuren anhand eines Ausführungsbeispiels näher erläutert. Dabei zeigt:
- Figur 1: eine perspektivische Ansicht eines erfindungsgemäßen Zaunsystems mit einer Befestigungseinheit zu Beginn von deren Montage;
- Figur 2: die Befestigungseinheit von Figur 1 nach Durchführung des Innenteils durch die Öffnung des Zaunpfostens und dessen Drehung;
- Figur 3: die Befestigungseinheit von Figur 2 nach Durchführung der Axialfortsätze des Außenteils durch die Öffnung des Zaunpfostens und Verspannen des Außenteils gegenüber dem Innenteil durch eine Mutter;
- Figur 4: eine perspektivische Ansicht des Innenteils;
- Figur 5: eine perspektivische Ansicht des Außenteils.

Die Figuren zeigen ein Zaunsystem bzw. eine erfindungsgemäße Befestigungseinrichtung 100, die beispielsweise zur Anbringung von Zaunelementen am Pfosten eines Zaunes verwendet werden kann, wobei sie jedoch auf diesen Anwendungszweck nicht beschränkt ist. Allgemein kann die Befestigungseinrichtung vielmehr an jeder hinterschnittenen, unrunden Öffnung geeigneter Form in einem Trägerkörper eingesetzt werden.

Bei dem gezeigten Ausführungsbeispiel enthält das Zaunsystem als Zaunträger einen hohlen Zaunpfosten P mit etwa quadratischem Querschnitt, wobei jedoch unter Anpassung der beteiligten Komponenten selbstverständlich auch Zaunpfosten mit anderen Formen und Querschnitten (z.B. runden Querschnitten) verwendet werden können. Der Zaunpfosten P enthält mindestens eine unrunde - also nicht einfach kreisförmige - Öffnung L in einer seiner Wände. Im dargestellten Beispiel hat diese Öffnung die Form einer Kreisfläche mit drei davon radial nach außen abstehenden Erweiterungen E, die um gleiche Winkel von 120° voneinander beanstandet sind.

Die Richtung von der Außenseite des Zaunpfostens P zu seinem Inneren wird im Folgenden als Blickrichtung für die Definition der Bezeichnungen "vorne" und "hinten" verstanden (in Blickrichtung näher gelegene Dinge sind daher "vorne" gegenüber entfernteren Dingen). Die Senkrechte zur Fläche der Öffnung L definiert eine Achse für die Bezeichnungen "axial" und "radial".

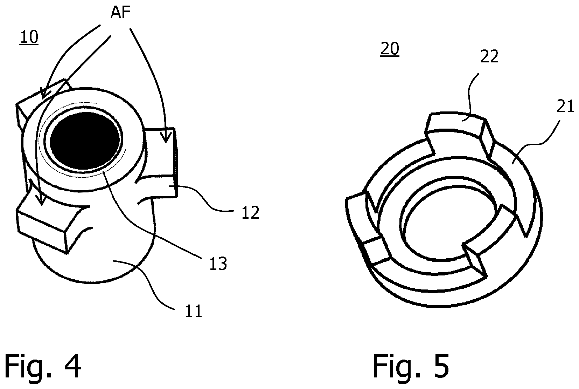

Die Befestigungseinheit 100 des Zaunsystems enthält als eine erste Komponente das in Figur 4 separat dargestellte Innenteil 10. Allgemein ausgedrückt wird von dem Innenteil gefordert, dass es einen Abschnitt aufweist, welcher sich durch die unrunde Öffnung des Zaunpfostens P in dessen Inneres führen lässt, und dass es weiterhin eine Anlagefläche aufweist, welche dann nach einer geeigneten Positionierung des Innenteils an der Innenseite des Zaunpfostens zu liegen kommt und verhindert, dass das Innenteil einfach wieder durch die Öffnung nach außen gezogen werden kann.

Im konkret dargestellten Ausführungsbeispiel wird das Innenteil 10 durch einen zylindrischen Körper 11 gebildet, in dessen vorderem Endbereich drei Radialfortsätze 12 radial nach außen abstehen, die im gleichen Winkelabstand von 120° über den Umfang verteilt angeordnet sind. Dabei sind die Radialfortsätze 12 und der Zylinderkörper 11 so dimensioniert, dass sie bei geeigneter Ausrichtung durch die unrunde Öffnung L des zugehörigen Zaunpfostens P in dessen Inneres geführt werden können. Dort angekommen kann das Innenteil 10 dann so gedreht werden, dass die Radialfortsätze 12 nicht mehr mit den Erweiterungen E der unrunden Öffnung L fluchten, sondern mit ihren axialen Vorderseiten an der Innenseite der Zaunpfostenwand anliegen. Diese Vorderseiten der Radialfortsätze 12 bilden dabei insgesamt die Anlagefläche AF.

Im dargestellten Ausführungsbeispiel erstreckt sich der Zylinderkörper 11 axial nach vorne über die Radialfortsätze 12 hinaus, sodass er sich im montierten Zustand der Befestigungseinheit 100 durch die unrunde Öffnung L des Zaunpfostens erstreckt. Dieses optionale Merkmal sorgt für eine zusätzliche Stabilisierung der Lage des Innenteils 10.

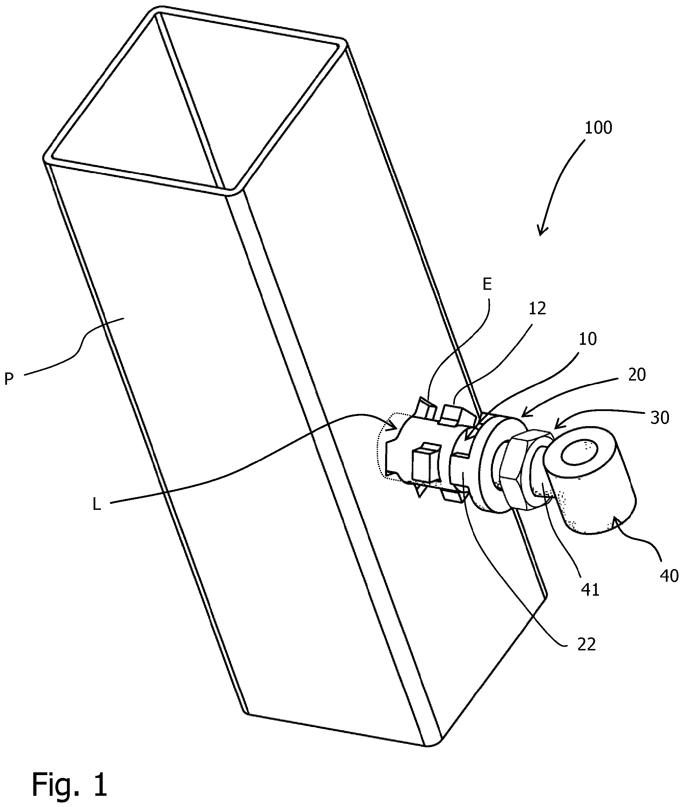

In der dargestellten Ausführungsform ist das Innenteil 10 weiterhin als eine Hülse mit einem Innengewinde 13 ausgebildet (z.B. M16 Gewinde). In dieses Innengewinde 13 kann ein Verbindungsbolzen, hier in Form eines Gewindebolzens 41, eingeschraubt werden, an welchem wiederum Zaunteile wie beispielsweise die Hülse 40 eines Scharniergelenks (eines Zauntores oder dergleichen) befestigt sein können (Figur 1).

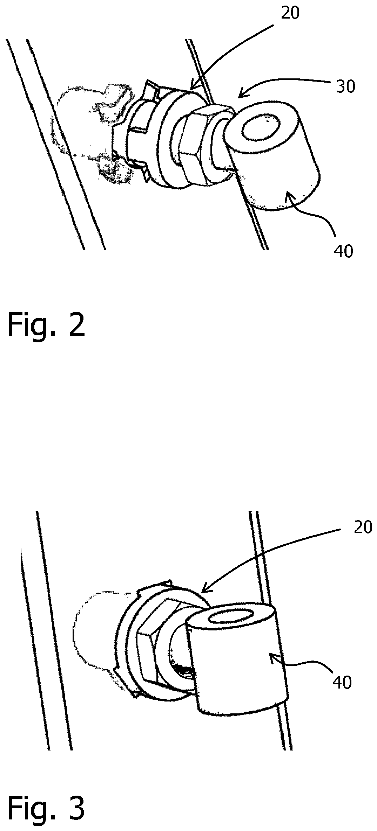

Wie aus Figur 2 erkennbar ist, ist das Innenteil 10 nach seiner (teilweisen) Einführung noch frei um seine Achse (die Achse des Gewindebolzens 41 bzw. des Innengewindes 13) drehbar. Daher könnte in diesem Zustand einerseits nichts am Gewindebolzen 41 festgeschraubt werden (da er sich mitdrehen würde), andererseits würde das Innenteil 10 schnell wieder in eine Position gelangen, in welcher es aus dem Zaunpfosten P herausrutschen kann. Um dies zu verhindern, ist eine Verdrehsicherung erforderlich, die eine Drehung des Innenteils 10 um seine Achse verhindert. Eine solche Verdrehsicherung könnte beispielsweise durch axiale Ansätze an den Radialfortsätzen erreicht werden, welche in den Erweiterungen E der unrunden Öffnung L verbleiben (d.h. die Radialfortsätze könnten dann nicht komplett aus dem Bereich der Erweiterungen E gedreht werden).

Eine Lösung mit einfacheren Formen der beteiligten Komponenten ergibt sich jedoch, wenn das in Figur 5 dargestellte separate Außenteil 20 als Verdrehsicherung verwendet wird. Das Außenteil 20 hat einen Basisring 21 mit drei davon axial abstehenden Axialfortsätzen 22, welche im montierten Zustand durch die Erweiterungen E der unrunden Öffnung L des Zaunpfostens P greifen, wodurch das Außenteil 20 drehfest gegenüber dem Zaunpfosten gelagert wird. Weiterhin sind die Axialfortsätze 22 so lang ausgebildet, dass sie sich hinter der Pfostenwand noch zwischen die Radialfortsätze 12 des Innenteils 10 erstrecken. Hindurch wird eine drehfeste formschlüssige Kopplung zwischen Innenteil 10 und Außenteil 20 erreicht. Da das Außenteil 20 jedoch bereits drehfest in der Öffnung L liegt, ist im Ergebnis auch das Innenteil 10 gegenüber einer Drehung relativ zum Zaunpfosten blockiert.

Der Basisring 21 des Innenteils 10 ist so groß, dass er nicht durch die Öffnung L des Zaunpfostens passt, das Außenteil 20 also an dessen Außenseite hält. Seine innere Bohrung ist so groß, dass der Gewindebolzen 41 hindurchpasst.

Um die beschriebene Anordnung schließlich dauerhaft an dem Zaunpfosten P zu montieren, kann eine Mutter 30 verwendet werden. Diese wird auf den Gewindebolzen 41 aufgeschraubt und presst das Außenteil 20 in Richtung des Innenteils 10. Die Wand des Zaunpfostens wird dadurch zwischen den Radialfortsätzen 12 des Innenteils und dem Basisring 21 des Außenteils eingeklemmt.

Zusammenfassend enthält die beschriebene Befestigungseinheit ein Innenteil 10, welches hinter einer unrunden hinterschnittenen Öffnung L des Zaunpfostens gegen Auszug gesichert positioniert werden kann. Eine Drehblockierung des Innenteils wird durch ein Außenteil 20 erreicht, das sich mit Axialfortsätzen 22 drehfest durch die unrunde Öffnung L des Zaunpfostens erstreckt und eine Drehung des Innenteils 10 blockiert. An dem Innenteil 10 ist vorzugsweise ein Gewindebolzen 41 angeschraubt, an dem Zaunteile befestigt werden können.

Damit ergibt sich für die montierte Befestigungseinheit 100 folgender Aufbau (von innen nach außen):
- Das Innenteil 10 ist im Inneren des Zaunpfostens angeordnet und liegt mit der Anlagefläche AF an dessen Innenwand an, der vordere Teil des Zylinderkörpers 11 erstreckt sich in die Öffnung L.
- Im Innenteil ist der Gewindebolzen 41 eingeschraubt und erstreckt sich durch die Öffnung L nach außen.
- Um den Gewindebolzen 41 ist das Außenteil 20 gelegt. Sein Basisring 21 liegt auf dem Außenrand der Öffnung L auf, die Axialfortsätze 22 erstrecken sich durch die Öffnung nach innen, zwischen die Radialfortsätze 12 des Innenteils.
- Die Mutter 30 ist auf den Gewindebolzen 41 aufgeschraubt und presst das Außenteil 20 gegen das Innenteil 10.

## Patentansprüche

1. Befestigungseinheit (100) geeignet zur Anbringung in einer unrunden Öffnung (L) einer Platte, beispielsweise der Wand eines Zaunpostens (P), wobei die Befestigungseinheit enthält:
- ein Innenteil (10) mit einer Anlagefläche (AF) unrunder Außenkontur;
- einen Verbindungsbolzen (41), der zur Anlagefläche (AF) abstehend angeordnet ist, ein Außengewinde aufweist und mit dem Innenteil (10) verbunden ist;
- eine Verdrehsicherung, die mit dem Innenteil (10) in Eingriff steht; wobei
- die Anlagefläche (AF) der Befestigungseinheit (100) durch Radialfortsätze (12) gebildet wird, die von einem Kreis radial nach außen abstehen;
und wobei
A) die Verdrehsicherung durch ein Außenteil (20) gebildet wird, das mit dem Innenteil (10) in Eingriff gebracht werden kann; das Außenteil (20) mindestens einen Axialfortsatz (22) aufweist, welcher sich parallel zum Verbindungsbolzen (41) erstreckt und in Eingriff mit den Innenteil (10) gebracht werden kann; und der Axialfortsatz (22) im Gebrauchszustand der Befestigungseinheit neben einem Radialfortsatz (12) angeordnet ist; oder
B) die Verdrehsicherung durch axiale Ansätze an den Radialfortsätzen gebildet wird, wobei die axialen Ansätze im Gebrauchszustand in Erweiterungen der unrunden Öffnungen (L) verbleiben, um ein Verdrehen des Innenteils (10) um seine eigene Achse zu verhindern.

2. Befestigungseinheit (100) nach Anspruch 1,
**dadurch gekennzeichnet, dass** der Verbindungsbolzen ein Außengewinde und das Innenteil (10) ein Innengewinde (13) aufweist, in das der Verbindungsbolzen (41) geschraubt ist.

3. Befestigungseinheit (100) nach mindestens einem der vorhergehenden Ansprüche,
**dadurch gekennzeichnet, dass** das Außenteil (20) einen Basisring (21) mit mindestens einem axial hiervon abstehenden Axialfortsatz (22) enthält.

4. Befestigungseinheit (100) nach mindestens einem der vorhergehenden Ansprüche,
**dadurch gekennzeichnet, dass** der Verbindungsbolzen (41) eine Buchse für ein Scharniergelenk trägt.

5. Zaunsystem, enthaltend einen Zaunträger (P) mit mindestens einer hinterschnittenen, unrunden Öffnung (L) sowie eine Befestigungseinheit (100) für Zaunteile nach mindestens einem der Ansprüche 1 bis 4,
wobei:
- die Anlagefläche (AF) des Innenteils (10) der Befestigungseinheit durch die Öffnung (L) des Zaunträgers geführt und hinter dieser durch Drehung um den Verbindungsbolzen (41) so positioniert werden kann, dass der Verbindungsbolzen (41) durch die Öffnung weist und sie durch Zug in Richtung des Verbindungsbolzens (41) nicht wieder durch die Öffnung (L) zurückgeführt werden kann;
- die Verdrehsicherung (20) drehfest in die Öffnung (L) eingreift.

6. Zaunsystem nach Anspruch 5,
**dadurch gekennzeichnet, dass** die Öffnung (L) die Form einer Kreisfläche mit radialen Erweiterungen (E) hat.

## Claims

1. Fixing unit (100) suitable to be mounted in a non-circular opening (L) of a plate, for example the wall of a fence post (P),
the fixing unit comprising:
- an inner part (10) with an abutment surface (AF) of non-circular outer contour;
- a connecting bolt (41) arranged to protrude from the abutment surface (AF), having an external thread, and connected to the inner part (10);
- an anti-rotation device which engages with the inner part (10);
wherein
- the abutment surface (AF) of the fixing unit (100) is formed by radial extensions (12) projecting radially outwardly from a circle;
and wherein
A) the anti-rotation device is formed by an outer part (20) which can be brought into engagement with the inner part (10); the outer part (20) has at least one axial extension (22) which extends parallel to the connecting bolt (41) and can be brought into engagement with the inner part (10); and the axial extension (22) is arranged adjacent to a radial extension (12) in the use state of the fixing unit;
or
B) the anti-rotation device is formed by axial projections on the radial extensions, the axial projections in the state of use of the fixing unit remaining in extensions of the non-circular openings (L), in order to prevent a rotation of the inner part (10) about its own axis.

2. Fixing unit (100) according to claim 1,
**characterized in that** the connecting bolt has an external thread and the inner part (10) an internal thread (13), into which the connecting bolt (14) is screwed in.

3. Fixing unit (100) according to at least one of the preceding claims, **characterized in that** the outer part (20) contains a base ring (21) with at least one axial extension (22) projecting axially therefrom.

4. Fixing unit (100) according to at least one of the preceding claims, **characterized in that** the connecting bolt (41) carries a bushing for a hinge joint.

5. A fence system, containing a fence carrier (P) having at least one undercut, non-circular opening (L) and a fixing unit (100) for fence parts according to at least one of the claims 1 to 4,
wherein:
- the abutment surface (AF) of the inner part (10) of the fixing unit can be guided through the opening (L) of the fence carrier and positioned behind it by rotation about the connecting bolt (41) in such a way that the connecting bolt (41) points through the opening and it cannot be guided back through the opening (L) by pulling in the direction of the connecting bolt (41);
- the anti-rotation device (20) engages non-rotatably in the opening (L).

6. A fence system according to claim 5,
**characterized in that** the opening (L) has the shape of a circular surface with radial extensions (E).

## Revendications

1. Unité de fixation (100) appropriée pour être montée dans une ouverture non circulaire (L) d'un panneau, par example la paroi d'un poteau de clôture (P),
dans lequel l'unité de fixation comprend:
- un élément intérieur (10) ayant une surface de butée (AF) de contour extérieur non circulaire;
- un boulon de connexion (41) disposé pour faire saillie de la surface de butée (AF), ayant un filetage extérieur et étant connecté à l'élément intérieur (10);
- un dispositif anti-rotation engagé avec l'élément intérieur(10);
dans lequel
- la surface de butée (AF) de l'unité de fixation (100) est formée par des extensions radiales (12) faisant saillie radialement vers l'extérieur à partir d'un cercle;
et dans lequel
A) le dispositif anti-rotation est formé par un élément extérieur (20) pouvant s'engager avec l'élément intérieur (10); l'élément extérieur (20) a au moins une extension axiale (22) s'étendant parallèlement au boulon de connexion (41) et pouvant s'engager avec l'élément intérieur (10); et l'extension axiale (22) est disposée de manière adjacente à une extension radiale (12) à l'état d'utilisation de l'unité de fixation;
ou
B) le dispositif anti-rotation est formé par des ergots axiaux sur les extensions radiales, les ergots axiaux restant dans le prolongement des ouvertures non circulaires (L) à l'état d'utilisation afin d'empêcher l'élément intérieur (10) de tourner autour de son propre axe.

2. Unité de fixation (100) selon la revendication 1,
**caractérisé en ce que** le boulon de connexion a un filetage extérieur et l'élément intérieur (10) a un filetage intérieur (13), dans lequel est vissé le boulon de connexion (41).

3. Unité de fixation (100) selon au moins l'une quelconque des revendications précédentes,
**caractérisé en ce que** l'élément extérieur (20) comprend un anneau de base (21) avec au moins une extension axiale (22) faisant saillie axialement à partir de celui-ci.

4. Unité de fixation (100) selon au moins l'une quelconque des revendications
précédentes,
**caractérisé en ce que** le boulon de connexion (41) porte une douille pour un joint articulé.

5. Système de clôture comprenant un poteau de clôture (P) ayant au moins une ouverture non circulaire en contre-dépouille (L), et une unité de fixation (100) pour les éléments de clôture selon au moins une des revendications 1 à 4,
dans lequel :
- la surface de butée (AF) de l'élément intérieur (10) de l'unité de fixation peut être guidée à travers l'ouverture (L) du poteau de clôture et positionnée derrière celle-ci par rotation autour du boulon de connexion (41) de telle sorte que le boulon de connexion (41) pointe à travers l'ouverture et qu'elle ne puisse pas être ramenée à travers l'ouverture (L) par traction en direction du boulon de connexion (41) ;
- le dispositif anti-rotation (20) s'engage de manière non rotative dans l'ouverture (L).

6. Système de clôture selon la revendication 5,
**caractérisé en ce que** l'ouverture (L) a la forme d'une surface circulaire avec extensions radiales (E).
